# EUROPEAN PATENT APPLICATION

(11) **EP 4 372 891 A1**
(43) Date of publication of application: **22.05.2024**
(21) Application number: 21949906.8
(22) Date of filing: 30.09.2021
(51) Int. Cl.: H01M 50/383

(54) **BATTERY DEVICE AND PREPARATION METHOD THEREFOR**

(30) Priority: 16.07.2021 CN 202110806950
(71) Applicant: Farasis Energy (Zhenjiang) Co., Ltd., Jiangsu 212132 (CN); Farasis Energy (Ganzhou) Co., Ltd., Ganzhou, Jiangxi 341000 (CN)
(72) Inventor: HUANG, Chuangju, Ganzhou Jiangxi 341000 (CN); LU, Wenming, Ganzhou Jiangxi 341000 (CN); WANG, Wanlin, Ganzhou Jiangxi 341000 (CN); LIU, Lirong, Ganzhou Jiangxi 341000 (CN)
(74) Representative: Monteiro Alves, Inês
(86) International application number: PCT/CN2021/122069
(87) International publication number: WO 2023/284133

(57) **Abstract**

The present invention provides a battery device, where the battery device includes a housing, a battery module, and a liquid cooling plate; the battery module includes a cover plate and a bottom plate that are opposite to each other, where the cover plate of the battery module is attached to the liquid cooling plate; and the housing is configured to accommodate the battery module, the bottom plate of the battery module is provided with a plurality of exhaust holes, and there is a gap between the bottom plate of the battery module and a bottom of the housing. According to the battery device in the present invention, when thermal runaway occurs, heat is not ejected around or upward, reducing damage to a passenger compartment of the vehicle. In addition, the liquid cooling plate is disposed above the battery module, and does not need to bear a weight of the module, so that a thickness of the liquid cooling plate can be reduced, and a weight of the battery device can be reduced.

## Description

### CROSS REFERENCE TO RELATED APPLICATIONS

The present application claims the priority of Chinese Patent Application No. 202110806950.3 filed on July 16, 2021, the contents of which are incorporated herein by reference in its entirety.

### TECHNICAL FIELD

The present invention pertains to the field of battery technologies, and in particular, relates to a battery device and a preparation method therefor.

### BACKGROUND

In a design of an existing battery device, a liquid cooling plate is usually located at a bottom of a device housing, or is integrated into the bottom of the housing. There are two main reasons. An air relief valve of a prismatic cell usually faces upward and should not face downward. Therefore, the liquid cooling plate usually performs cooling at a bottom of the cell. A pouch cell is limited by a structure design of a conventional vehicle. The liquid cooling plate is usually placed at the bottom of the device housing, and performs cooling on the module from the bottom. When thermal runaway occurs on a module and a cell inside the device, high-temperature gas and flame need to be quickly discharged to the outside of the device. According to the conventional design, some holes can be opened on a surface of the module to help discharge gas. However, because the liquid cooling plate is located at the bottom of the device housing and the module needs to be fastened to the liquid cooling plate, a hole cannot be opened on a bottom surface of the module, but can be opened only on a side surface or a top of the module. Therefore, according to the existing device design, after thermal runaway occurs on the internal cell, the high-temperature gas and flame can be ejected only from a side plate, an end plate, and a cover plate.

The high-temperature gas and flame easily transfer heat to an adjacent module or an inner wall of the device housing after being discharged outward through holes in the side plate and the end plate. Transferring the heat to the adjacent module causes thermal runaway on the adjacent module, resulting in mutual ejection. Consequently, fire or explosion occurs due to accumulation of excessive heat inside the device. Transferring the heat to the inner wall of the device housing causes the heat to be reflected back to the module again because there is no place to release the heat. Therefore, the heat is externally superposed on the module, aggravating an outbreak of the module.

The high-temperature gas and flame inside the module easily burn through the cover plate of the device directly after being discharged outward through a hole in the cover plate, causing fire to spread to an upper part of the device, and posing a threat to a passenger compartment of the vehicle.

### SUMMARY

In view of a deficiency of a battery device in a conventional technology, the present invention provides a battery device.

Specifically, the present invention relates to the following aspects: A battery device includes a housing, a battery module, and a liquid cooling plate; the battery module includes a cover plate and a bottom plate that are opposite to each other, where the cover plate of the battery module is attached to the liquid cooling plate; and the housing is configured to accommodate the battery module, the bottom plate of the battery module is provided with a plurality of exhaust holes, and there is a gap between the bottom plate of the battery module and a bottom of the housing.

Optionally, a beam is disposed inside the housing and the battery module is fastened to the beam.

Optionally, an explosion-proof valve is disposed at the bottom of the housing.

Optionally, distribution density of the plurality of exhaust holes on the bottom plate of the battery module is 8%-20%, wherein a value of the distribution density is equal to an area of the plurality of exhaust holes divided by an area of the bottom plate of the battery module.

Optionally, an aperture of the exhaust hole is 2 mm to 10 mm.

Optionally, a spacing between adjacent exhaust holes is 5 mm to 15 mm.

Optionally, an area of a single exhaust hole disposed at an edge of the bottom plate of the battery module is larger than an area of a single exhaust hole disposed at a center of the bottom plate of the battery module.

Optionally, the exhaust hole is sealed by using an insulation film.

Optionally, the gap between the bottom plate of the battery module and the bottom of the housing is 2 mm to 20 mm.

Optionally, the battery module comprises a pouch cell.

Optionally, the liquid cooling plate comprises a cover plate of the liquid cooling plate and a bottom plate of the liquid cooling plate that are opposite to each other, the cover plate of the liquid cooling plate has a plurality of recesses, and the cover plate of the liquid cooling plate is attached to the bottom plate of the liquid cooling plate through the recesses, wherein the plurality of recesses are arranged in a dot matrix, and are preferably arranged in a staggered manner.

Optionally, a distance between adjacent recesses is 15 mm to 20 mm.

Optionally, a depth of a flow channel of the liquid cooling plate is 2 mm to 5 mm.

Optionally, a thickness of the liquid cooling plate is 2 mm to 5 mm.

Optionally, the housing is not provided with a cover plate. A method for assembling the above-mentioned battery device includes the following steps:
fastening a liquid cooling plate to a housing body and performing upside-down flipping by 180 degrees;
fastening a battery module inside the housing body, so that a cover plate of the battery module is attached to the liquid cooling plate; and
fastening a bottom plate of a housing to the housing body and performing upside-down flipping by 180 degrees to obtain the battery device.

Optionally, the method further includes connecting the obtained battery device to a vehicle.

A liquid cooling plate includes a cover plate of the liquid cooling plate and a bottom plate of the liquid cooling plate that are opposite to each other, the cover plate of the liquid cooling plate has a plurality of recesses, and the cover plate of the liquid cooling plate is attached to the bottom plate of the liquid cooling plate through the recesses, where the plurality of recesses are arranged in a dot matrix, and are preferably arranged in a staggered manner.

Optionally, a distance between adjacent recesses is 15 mm to 20 mm.

Optionally, a depth of a flow channel of the liquid cooling plate is 2 mm to 5 mm.

Optionally, a thickness of the liquid cooling plate is 2 mm to 5 mm.

According to the battery device in the present invention, a gap is reserved between the bottom of the module and the housing of the battery device, and a plurality of exhaust holes are provided at the bottom plate of the module, thereby effectively alleviating or resolving a thermal diffusion safety problem of a power battery of a new energy electric vehicle. When thermal runaway occurs, high-temperature gas or flame generated inside the battery device due to the thermal runaway can be quickly discharged from a lower part of the battery device to the outside through the gap in the lower part and the explosion-proof valve, without being ejected around or upward, reducing damage to a passenger compartment of the vehicle.

Compared with a conventional battery device, the battery device in the present invention may be optionally provided with no cover plate of the housing in terms of structure, thereby reducing mounting space, reducing a weight of the battery device, and reducing costs. In addition, the liquid cooling plate is disposed above the battery module, and does not need to bear a weight of the module, and is used only for cooling, so that a thickness of the liquid cooling plate can be reduced, and a weight of the battery device can be further reduced. In addition, dot-matrix arrangement of the cooling plate, especially staggered arrangement, can achieve an optimal heat exchange effect.

### BRIEF DESCRIPTION OF DRAWINGS

FIG. 1 is a partial sectional view of a battery device;
FIG. 2 is a schematic diagram of a battery device assembly process;
FIG. 3 is a front view of a bottom plate of a battery module with an exhaust hole;
FIG. 4 is another partial sectional view of a battery device;
FIG. 5 is a front view of a liquid cooling plate; and
FIG. 6 is a cross-sectional view of a liquid cooling plate.

Reference numerals:
1: battery module; 2: liquid cooling plate; 21: cover plate of a liquid cooling plate; 22: bottom plate of a liquid cooling plate; 23: flow channel; 3: bottom plate of a housing; 4: beam; 11: cover plate of a battery module; 12: bottom plate of a battery module; 5: housing body; 6: explosion-proof valve; 7: exhaust hole.

### DESCRIPTION OF EMBODIMENTS

The following further describes the present invention with reference to embodiments. It should be understood that the embodiments are merely intended to further describe and explain the present invention, and are not intended to limit the present invention.

Unless otherwise defined, technical and scientific terms in this specification have the same meanings as those commonly understood by a person skilled in the art. Although methods and materials similar to or the same as those described herein can be used in experimental or practical applications, the materials and methods are still described below in this specification. In the case of a conflict, definitions of the materials and methods included in this specification shall prevail. In addition, the materials, methods, and examples are for illustration only and are not limitative. The following further describes the present invention with reference to specific embodiments, which are not intended to limit the scope of the present invention.

Unless otherwise specified and defined explicitly, the terms "connected to", "connect", and "fasten" should be understood in a broad sense, for example, may be a fixed connection, may be a detachable connection or an integrated connection; may be a mechanical connection, or may be an electrical connection; and may be a direct connection, may be an indirect connection through an intermediate medium, or may be internal communication between two elements or an interaction relationship between two elements. A person of ordinary skill in the art can understand specific meanings of the above-mentioned terms in the present invention based on an actual situation.

The present invention provides a battery device, where the battery device includes a housing, a battery module, and a liquid cooling plate; the battery module includes a cover plate and a bottom plate that are opposite to each other, where the cover plate of the battery module is attached to the liquid cooling plate; and the housing is configured to accommodate the battery module, the bottom plate of the battery module is provided with a plurality of exhaust holes, and there is a gap between the bottom plate of the battery module and a bottom of the housing.

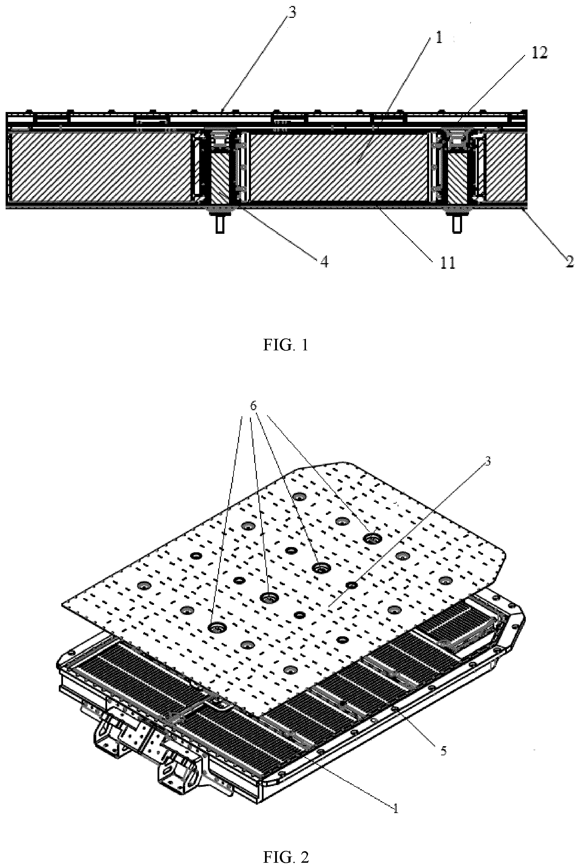

The following describes a specific structure of a battery device according to an embodiment of the present invention with reference to FIG. 1 to FIG. 4.

As shown in FIG. 1 to FIG. 4, the battery device includes a housing, a battery module 1, and a liquid cooling plate 2; the battery module 1 includes a cover plate 11 of the battery module and a bottom plate 12 of the battery module that are opposite to each other, where the cover plate 11 of the battery module is attached to the liquid cooling plate 2. Attachment herein means that the cover plate 11 of the battery module is in direct contact with the liquid cooling plate 2. However, in the conventional battery device, the liquid cooling plate is located at a bottom of the battery module, and the liquid cooling plate needs to be loaded into the housing first, and then the battery module is loaded into the housing, so that the battery module is attached to the liquid cooling plate. Further, the liquid cooling plate 2 in the present invention is located above the cover plate of the battery module, and the liquid cooling plate 2 can be directly connected to a vehicle body, so that the vehicle body protects the liquid cooling plate, thereby enhancing mechanical strength of a top of the battery device. A conventional housing includes a bottom plate of the housing and a cover plate of the housing. Compared with a conventional battery device, in this design of the present invention, the cover plate of the housing may be optionally not disposed in terms of structure, thereby reducing mounting space, reducing a weight of the battery device, and reducing costs. In addition, the liquid cooling plate is disposed above the battery module, and does not need to bear a weight of the module, and is used only for cooling, so that a thickness of the liquid cooling plate can be reduced, and a weight of the battery device can be further reduced. The housing is configured to accommodate the battery module 1, the bottom plate 12 of the battery module is provided with a plurality of exhaust holes 7, and there is a gap between the bottom plate 12 of the battery module and a bottom of the housing.

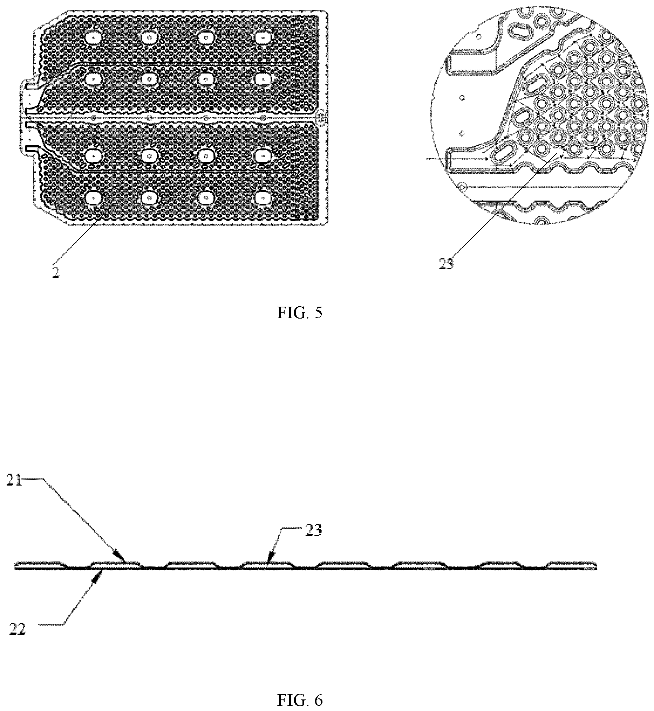

The liquid cooling plate 2 in the present invention may be any existing liquid cooling plate in the conventional technology, or may be the liquid cooling plate 2 shown in FIG. 5 and FIG. 6. Specifically, as shown in FIG. 5 and FIG. 6, the liquid cooling plate 2 includes a cover plate 21 of the liquid cooling plate and a bottom plate 22 of the liquid cooling plate that are opposite to each other, the cover plate 21 of the liquid cooling plate has a plurality of recesses, and the cover plate 21 of the liquid cooling plate is attached to the bottom plate 22 of the liquid cooling plate through the recesses, where the plurality of recesses are arranged in a dot matrix, and are preferably arranged in a staggered manner. The staggered arrangement means that two adjacent rows of recesses are arranged in a staggered manner. A flow channel formed in this staggered arrangement manner ensures that cooling liquid in the flow channel does not flow in a straight line. When the cooling liquid enters the liquid cooling plate 2, the cooling liquid can flow in the flow channel 23 in a direction indicated by an arrow in FIG. 5, that is, flow in the liquid cooling plate 2 in a staggered manner, thereby providing a better cooling effect.

The cover plate 21 of the liquid cooling plate and the bottom plate 22 of the liquid cooling plate are two flat plates, and thicknesses of the two flat plates may be the same or different, for example, the thickness of each plate may be 1 mm. Materials of the cover plate 21 of the liquid cooling plate and the bottom plate 22 of the liquid cooling plate may be Al3003 or other Al of series 3. The recess of the cover plate 21 of the liquid cooling plate may be a part of a spherical shape or another shape of a recess. After the cover plate 21 of the liquid cooling plate and the bottom plate 22 of the liquid cooling plate are connected through soldering, the recess is attached to the bottom plate 22, and a flow channel 23 connecting a peripheral unrecessed position and the bottom plate 22 of the liquid cooling plate is formed to circulate the cooling liquid. A processing technique of the bottom plate 22 of the liquid cooling plate and the cover plate 21 of the liquid cooling plate may be stamping, harmonica-type processing, or aluminum extrusion. Stamping with a lowest cost is preferably selected for processing and molding. A distance between two adjacent recesses is 15 mm to 20 mm. A depth of the flow channel 23 is 2 mm to 5 mm. The depth herein refers to a distance between the bottom plate 22 of the liquid cooling plate and the cover plate 21 of the liquid cooling plate in the corresponding flow channel 23.

Optionally, a thickness of the liquid cooling plate 2 is 2 mm to 5 mm. The thickness herein means that a maximum distance between an upper surface of the cover plate 21 of the liquid cooling plate and a lower surface of the bottom plate 22 of the liquid cooling plate is 2 mm to 5 mm.

The above-mentioned structure of dot-matrix staggered arrangement of a plurality of recesses can achieve an optimal heat exchange effect. When a volume of a flow channel is the same, a simulation manner is used to compare a cooling effect of the dot-matrix staggered arrangement in the present invention with a cooling effect of using an S-shaped flow channel. A result shows that a temperature difference between a highest temperature and a lowest temperature in the structure of the dot-matrix staggered arrangement is 4.4°C, which is less than 4.7°C in the S-shaped flow channel. In addition, a pressure difference between a water inlet and a water outlet of the flow channel for the dot-matrix staggered arrangement is 21 kPa, and a pressure difference for the S-shaped flow channel is 22 kPa. A simulation result shows that the flow channel structure of the dot-matrix staggered arrangement in the present invention has a better cooling effect and a smaller resistance.

The battery module 1 further includes structures such as a cell, a busbar, end plates on two sides, and side plates on two sides. The cell can be specifically designed based on an actual need, which is not limited herein. In a specific embodiment, the cell of the battery module 1 is a pouch cell. The pouch cell has no pressure relief valve and a cell placement manner is flexible and changeable so that cooling can be performed from all directions. Therefore, a top cooling manner can be used. In addition, the battery module and the beam are tightly attached to the liquid cooling plate without a gap, and air content inside the battery device is small and condensate water is not easily generated. Even if a small amount of condensate water is generated on an inner side of the liquid cooling plate during charging, discharging, and cooling, the condensate water does not drip on electrified bodies such as positive and negative terminals of the module. The condensate water may only drip on a sampling plate of the battery module and a connector position of the sampling plate. Because these positions already meet waterproof requirements such as IP65, dripping of a small amount of condensate water drip has no impact on a function and electrical insulation of the battery module.

The cover plate 11 of the battery module is attached to the liquid cooling plate 2. "Attachment" herein may refer to any manner of fastening, connection, adhesion, and the like in the conventional technology that needs to be used based on a specific design. In a specific embodiment, the cover plate 11 of the battery module is fastened and attached to the liquid cooling plate 2 by using a thermally conductive adhesive, so that heat of the battery module is transferred by using the thermally conductive adhesive.

In a specific embodiment, the battery module 1 can be pre-tightened and stacked in a sequence of "end plate - cell (there are several cells, and a specific quantity is determined based on a capacity of the battery module) - end plate", and then tabs on two sides of the cell are welded to the busbar. Then, the side plates on two sides are respectively welded to the end plates on two sides, and finally, the cover plate 11 and the bottom plate 12 of the battery module are separately welded.

The housing includes a housing body 5 and a bottom plate 3 of the housing, and a cavity formed by the housing body 5 and the bottom plate 3 of the housing is used to accommodate the battery module 1. A shape of the housing can be adjusted based on a structure of the battery module 1 or a specific design need. In a specific embodiment, a beam 4 is disposed inside the housing, and the battery module 1 is fastened to the beam 4. For example, the battery module 1 can be fastened to the beam 4 through bolted connection. The beam 4 can be designed by using any solution known in the conventional technology, for example, may be a crossbeam, a longitudinal beam, or another type of beam.

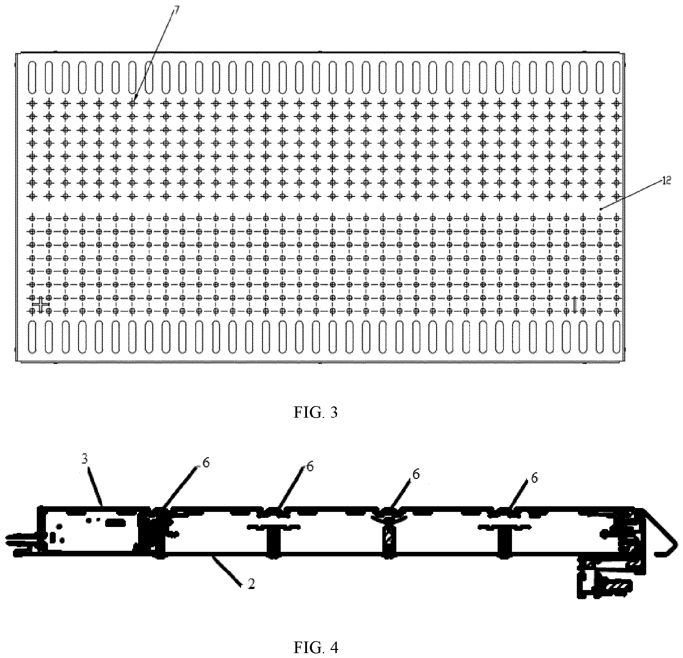

As shown in FIG. 3, the bottom plate 12 of the battery module is provided with a plurality of exhaust holes 7. When thermal runaway occurs on the cell of the battery module 1, the exhaust hole 7 is configured to discharge high-temperature gas or flame generated by the cell to the outside of the battery device. A shape, a spacing, a quantity, and the like of exhaust holes 7 are not limited in terms of design, and can be flexibly designed as needed. In a specific embodiment, distribution density of the plurality of exhaust holes 7 on the bottom plate 12 of the battery module is 8%-20%. A value of the distribution density is equal to an area of the plurality of exhaust holes divided by an area of the bottom plate of the battery module. For example, if the area of the bottom plate 12 of the battery module is 1 m² and the total area of the plurality of exhaust holes 7 is 0.2 m², the distribution density of the plurality of exhaust holes 7 on the bottom plate 12 of the battery module is 0.2.

The exhaust holes 7 may be in any shape, for example, may be in a circular shape, a kidney shape, an oval shape, a triangular shape, a quadrilateral shape, or another regular or irregular shape. The exhaust holes 7 may be in a same shape, or may be a combination of two or more shapes. In a specific implementation, the exhaust hole is a circle with an aperture of 2 mm to 10 mm.

In a specific embodiment, the exhaust hole 7 is a combination of a kidney shape and a circular shape. As shown in FIG. 3, the kidney-shaped exhaust hole is provided at an edge position of the bottom plate 12 of the battery module, that is, a position away from a center of the bottom plate 12 of the battery module. The circular exhaust hole is provided at a position closer to the center of the bottom plate 12 of the battery module relative to the kidney-shaped exhaust hole, and an area of a single kidney-shaped exhaust hole is larger than an area of a single circular exhaust hole. In a specific implementation, a total area of the kidney-shaped exhaust holes is 15372 mm² and a total area of the circular exhaust holes is 11290 mm². According to the simulation and actual measurement results, more than 80% of the gas is discharged from the edge position of the bottom plate 12 of the battery module. Therefore, providing the kidney-shaped exhaust holes with a larger opening area at the edge position of the bottom plate 12 of the battery module is more conducive to gas discharge of the battery module.

Further, a spacing between two adjacent exhaust holes 7 is 8 mm to 15 mm.

In a specific embodiment, the exhaust hole 7 is sealed by using an insulation film. The insulation film mainly serves to prevent foreign matters from entering the module and improve the electrical insulation performance of the module.

There is a gap between the bottom plate 12 of the battery module and the bottom of the housing, which means that there is a gap between the bottom plate 12 and the bottom plate 3 of the housing. The gap between the bottom plate 12 of the battery module and the bottom of the housing is conducive to heat diffusion, so that high-temperature gas or flame generated by the cell is not blocked by the housing, and further discharged from the bottom of the housing, without posing a serious threat to a passenger compartment of a vehicle. To achieve a good heat diffusion effect, preferably, the gap between the bottom plate 12 of the battery module and the bottom of the housing is 2 mm to 20 mm, for example, may be 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or 20 mm. Specifically, the gap between the bottom plate 12 of the battery module and the bottom of the housing refers to a distance between the bottom plate 12 of the battery module and the bottom plate 3 of the housing.

In a specific embodiment, an explosion-proof valve 6 is disposed at the bottom of the housing, that is, an explosion-proof valve is disposed on the bottom plate 3 of the housing, and is configured to discharge the high-temperature gas or flame generated by the cell to the outside of the battery device through the exhaust hole 7 and the explosion-proof valve 6 successively. A structure of the explosion-proof valve 6 may be an explosion-proof valve structure known in the conventional technology, and a quantity of the explosion-proof valve 6 may be adjusted based on an actual need. In a specific embodiment, there are four explosion-proof valves 6. The explosion-proof valve 6 may alternatively be replaced with another similar product of a film type or a mesh shape, provided that a gas discharge function can be implemented.

Further, the battery device further includes a battery management system and a battery protection apparatus.

The present invention further provides a method for assembling the above-mentioned battery device. The method includes the following steps: fastening a liquid cooling plate to a housing body and performing upside-down flipping by 180 degrees; fastening a battery module inside the housing body, so that a cover plate of the battery module is attached to the liquid cooling plate; and fastening a bottom plate of a housing to the housing body and performing upside-down flipping by 180 degrees to obtain the battery device.

Further, the method further includes connecting the obtained battery device to a vehicle.

Specifically, the battery device in the present invention can be assembled in the following manner:
First, the liquid cooling plate and the housing body are fastened by using a structural adhesive and/or a bolt, and then flipped upside down by 180 degrees after the fastening (in this case, the liquid cooling plate is located at the bottom). Then, the battery module is placed into the housing body. The battery module is not fastened to the bottom plate of the housing in a conventional manner. Instead, the module is flipped upside down by 180 degrees and then flanges on two sides of the battery module are fastened, through bolted connection, to beams that are connected to two ends of the housing. The battery module is connected to the liquid cooling plate by using a thermally conductive adhesive. Finally, the bottom plate of the housing is fastened to the housing body by using a structural adhesive and bolted connection. In this case, the assembled battery device is flipped upside down by 180 degrees again (in this case, the liquid cooling plate is located at the top and the bottom plate of the housing is located at the bottom), and can be further connected to a vehicle. Inside the battery device, heat transfer is performed between the top of the battery module and the liquid cooling plate by using a thermally conductive adhesive. In the middle, the flange of the module is hung on the beam of the housing through bolted connection. There is a gap of 2 mm to 20 mm between the bottom of the battery module and the bottom of the housing.

### Embodiments

### Embodiment 1

As shown in FIG. 1 to FIG. 4, a battery device includes a housing, a battery module 1, and a liquid cooling plate 2; the battery module 1 includes a cover plate 11 of the battery module and a bottom plate 12 of the battery module that are opposite to each other, where the cover plate 11 of the battery module is fastened and attached to the liquid cooling plate 2 by using a thermally conductive adhesive; and the housing is configured to accommodate the battery module 1, and four explosion-proof valves are disposed at the bottom of the housing, that is, on the bottom plate 3 of the housing. A crossbeam 4 is disposed inside the housing, and the battery module 1 is fastened to the crossbeam 4 through bolted connection. A cell in the battery module 1 is a pouch cell.

An area of the bottom plate 12 of the battery module is 180588 mm², 648 exhaust holes 7 are disposed, and each exhaust hole 7 is sealed by using an insulation film. The exhaust hole 7 is a combination of a kidney shape and a circular shape. As shown in FIG. 3, the kidney-shaped exhaust hole is provided at an edge position of the bottom plate 12 of the battery module, the circular exhaust hole is provided at a position closer to the center of the bottom plate 12 of the battery module relative to the kidney-shaped exhaust hole, an area of a single kidney-shaped exhaust hole is 213.5 mm², and an area of a single circular exhaust hole is 19.6 mm². A total area of the kidney-shaped exhaust holes is 15372 mm², a total area of the circular exhaust holes is 11290 mm², a distance between two adjacent exhaust holes is 11.4 mm, and distribution density of the plurality of exhaust holes 7 on the bottom plate 12 of the battery module is 14.8%. There is a gap between the bottom plate 12 of the battery module and the bottom of the housing, and the gap is 10 mm, that is, a distance between the bottom plate 12 of the battery module and the bottom plate 3 of the housing is 10 mm.

As shown in FIG. 5 and FIG. 6, the liquid cooling plate 2 includes a cover plate 21 of the liquid cooling plate and a bottom plate 22 of the liquid cooling plate that are opposite to each other, the cover plate 21 of the liquid cooling plate has a plurality of recesses, and the cover plate 21 of the liquid cooling plate is attached to the bottom plate 22 of the liquid cooling plate through the recesses, where the plurality of recesses are arranged in a dot matrix in a staggered manner. The cover plate 21 of the liquid cooling plate and the bottom plate 22 of the liquid cooling plate are two flat plates with a thickness of 1 mm and a material of Al3003. The recess of the cover plate 21 of the liquid cooling plate is a part of a spherical shape. After the cover plate 21 of the liquid cooling plate and the bottom plate 22 of the liquid cooling plate are connected through soldering, the recess is attached to the bottom plate 22, and a flow channel 23 connecting a peripheral unrecessed position and the bottom plate 22 of the liquid cooling plate is formed to circulate the cooling liquid. A distance between two adjacent recesses is 18 mm. A depth of the flow channel 23 is 3 mm. A thickness of the liquid cooling plate 2 is 5 mm.

### Embodiment 2

A battery device in Embodiment 2 has a same structure as the battery device in Embodiment 1, and a difference lies only in a distance between a bottom plate 12 of a battery module and a bottom plate 3 of a housing. An area of the bottom plate 12 of the battery module is 180588 mm², 648 exhaust holes 7 are disposed, and each exhaust hole 7 is sealed by using an insulation film. The exhaust hole 7 is a combination of a kidney shape and a circular shape. As shown in FIG. 3, the kidney-shaped exhaust hole is provided at an edge position of the bottom plate 12 of the battery module, the circular exhaust hole is provided at a position closer to the center of the bottom plate 12 of the battery module relative to the kidney-shaped exhaust hole, an area of a single kidney-shaped exhaust hole is 213.5 mm², and an area of a single circular exhaust hole is 19.6 mm². A total area of the kidney-shaped exhaust holes is 15372 mm², a total area of the circular exhaust holes is 11290 mm², a distance between two adjacent exhaust holes is 11.4 mm, and distribution density of the plurality of exhaust holes 7 on the bottom plate 12 of the battery module is 14.8%. There is a gap between the bottom plate 12 of the battery module and the bottom of the housing, and the gap is 2 mm, that is, a distance between the bottom plate 12 of the battery module and the bottom plate 3 of the housing is 2 mm.

The liquid cooling plate 2 is the same as that in Embodiment 1.

### Embodiment 3

Embodiment 3 differs from Embodiment 1 in a distance between a bottom plate 12 of a battery module and a bottom plate 3 of a housing. An area of the bottom plate 12 of the battery module is 180588 mm², 648 exhaust holes 7 are disposed, and each exhaust hole 7 is sealed by using an insulation film. The exhaust hole 7 is a combination of a kidney shape and a circular shape. As shown in FIG. 3, the kidney-shaped exhaust hole is provided at an edge position of the bottom plate 12 of the battery module, the circular exhaust hole is provided at a position closer to the center of the bottom plate 12 of the battery module relative to the kidney-shaped exhaust hole, an area of a single kidney-shaped exhaust hole is 213.5 mm², and an area of a single circular exhaust hole is 19.6 mm². A total area of the kidney-shaped exhaust holes is 15372 mm², a total area of the circular exhaust holes is 11290 mm², a distance between two adjacent exhaust holes is 11.4 mm, and distribution density of the plurality of exhaust holes 7 on the bottom plate 12 of the battery module is 14.8%. There is a gap between the bottom plate 12 of the battery module and the bottom of the housing, and the gap is 20 mm, that is, a distance between the bottom plate 12 of the battery module and the bottom plate 3 of the housing is 20 mm.

The liquid cooling plate 2 is the same as that in Embodiment 1.

### Embodiment 4

Embodiment 4 differs from Embodiment 1 in a design of a bottom plate 12 of a battery module.

An area of the bottom plate 12 of the battery module is 180588 mm², and circular exhaust holes 7 are evenly provided on the bottom plate 12 of the battery module, where an area of a single circular exhaust hole is 19.6 mm², and each exhaust hole 7 is sealed by using an insulation film. A total area of the circular exhaust holes 7 is 26662 mm², and distribution density of the plurality of exhaust holes 7 on the bottom plate 12 of the battery module is 14.8%. There is a gap between the bottom plate 12 of the battery module and the bottom of the housing, and the gap is 10 mm, that is, a distance between the bottom plate 12 of the battery module and the bottom plate 3 of the housing is 10 mm. The liquid cooling plate 2 is the same as that in Embodiment 1.

### Embodiment 5

Embodiment 5 differs from Embodiment 1 in a design of a bottom plate 12 of a battery module.

An area of the bottom plate 12 of the battery module is 180588 mm², and kidney-shaped exhaust holes 7 are evenly provided on the bottom plate 12 of the battery module, where an area of a single kidney-shaped exhaust hole is 213.5 mm², and each exhaust hole 7 is sealed by using an insulation film. A total area of the kidney-shaped exhaust holes 7 is 26662 mm², and distribution density of the plurality of exhaust holes 7 on the bottom plate 12 of the battery module is 14.8%. There is a gap between the bottom plate 12 of the battery module and the bottom of the housing, and the gap is 10 mm, that is, a distance between the bottom plate 12 of the battery module and the bottom plate 3 of the housing is 10 mm. The liquid cooling plate 2 is the same as that in Embodiment 1.

A thermal runaway test is performed on the battery device in Embodiment 1 to Embodiment 5. A specific test method is as follows:

The test is performed by triggering, by using a heating method, a cell at a middle position of the battery to undergo thermal runaway. For details, refer to the national power battery standards (GB 38031-2020). A result of the measurement is that the battery device in Embodiment 1 to Embodiment 5 of the present invention is triggered to undergo thermal runaway without adding any fire protection and heat insulation material such as a mica sheet or an aerogel to the battery device. No fire or explosion occurs outside the battery pack within five minutes for all embodiments. This surpasses the standard required in the GB 38031-2020 for all embodiments, that is, no fire or explosion occurs within five minutes. Specific duration varies according to different embodiments. For details, refer to data listed in Table 1. Duration in each of Embodiment 1 and Embodiment 5 exceeds one hour. However, Embodiment 5 uses a design in which all holes are kidney-shaped holes, and a simulation result shows that mechanical structure strength in Embodiment 5 is relatively low, and Embodiment 5 may fail an extrusion test. Therefore, Embodiment 1 is an optimal design.

**Table 1**

| | Duration within which naked flame appears outside the housing after thermal runaway is triggered |
|---|---|
| Embodiment 1 | More than one hour |
| Embodiment 2 | 8 minutes |
| Embodiment 3 | 30 minutes |
| Embodiment 4 | 10 minutes |
| Embodiment 5 | More than one hour |

## Claims

1. A battery device, wherein
the battery device comprises a housing, a battery module, and a liquid cooling plate;
the battery module comprises a cover plate and a bottom plate that are opposite to each other, wherein the cover plate of the battery module is attached to the liquid cooling plate; and
the housing is configured to accommodate the battery module, the bottom plate of the battery module is provided with a plurality of exhaust holes, and there is a gap between the bottom plate of the battery module and a bottom of the housing.

2. The battery device according to claim 1,wherein a beam is disposed inside the housing and the battery module is fastened to the beam.

3. The battery device according to claim 1, wherein an explosion-proof valve is disposed at the bottom of the housing.

4. The battery device according to claim 1, wherein distribution density of the plurality of exhaust holes on the bottom plate of the battery module is 8%-20%, wherein a value of the distribution density is equal to an area of the plurality of exhaust holes divided by an area of the bottom plate of the battery module.

5. The battery device according to claim 1, wherein an aperture of the exhaust hole is 2 mm to 10 mm.

6. The battery device according to claim 5, wherein a spacing between adjacent exhaust holes is 8 mm to 15 mm.

7. The battery device according to claim 1, wherein an area of a single exhaust hole disposed at an edge of the bottom plate of the battery module is larger than an area of a single exhaust hole disposed at a center of the bottom plate of the battery module.

8. The battery device according to claim 1, wherein the exhaust hole is sealed by using an insulation film.

9. The battery device according to claim 1, wherein the gap between the bottom plate of the battery module and the bottom of the housing is 2 mm to 20 mm.

10. The battery device according to claim 1, wherein the battery module comprises a pouch cell.

11. The battery device according to claim 1, wherein the liquid cooling plate comprises a cover plate of the liquid cooling plate and a bottom plate of the liquid cooling plate that are opposite to each other, the cover plate of the liquid cooling plate has a plurality of recesses, and the cover plate of the liquid cooling plate is attached to the bottom plate of the liquid cooling plate through the recesses, wherein the plurality of recesses are arranged in a dot matrix, and are preferably arranged in a staggered manner.

12. The battery device according to claim 11, wherein a distance between adjacent recesses is 15 mm to 20 mm.

13. The battery device according to claim 11, wherein a depth of a flow channel of the liquid cooling plate is 2 mm to 5 mm.

14. The battery device according to claim 11, wherein a thickness of the liquid cooling plate is 2 mm to 5 mm.

15. The battery device according to claim 1, wherein the housing is not provided with a cover plate.

16. A liquid cooling plate, wherein the liquid cooling plate comprises a cover plate of the liquid cooling plate and a bottom plate of the liquid cooling plate that are opposite to each other, the cover plate of the liquid cooling plate has a plurality of recesses, and the cover plate of the liquid cooling plate is attached to the bottom plate of the liquid cooling plate through the recesses, wherein the plurality of recesses are arranged in a dot matrix, and are preferably arranged in a staggered manner.

17. The liquid cooling plate according to claim 16, wherein a distance between adjacent recesses is 15 mm to 20 mm.

18. The liquid cooling plate according to claim 16, wherein a depth of a flow channel of the liquid cooling plate is 2 mm to 5 mm.

19. The liquid cooling plate according to claim 16, wherein a thickness of the liquid cooling plate is 2 mm to 5 mm.
